Europäisches Patentamt

European Patent Office

Office européen des brevets

(19)

(11) Veröffentlichungsnummer: **0 268 041 B1**

(12) **EUROPÄISCHE PATENTSCHRIFT**

(45) Veröffentlichungstag der Patentschrift: **17.06.92**

(51) Int. Cl.⁵: **B64C 13/50**, H04B 10/00

(21) Anmeldenummer: **87113965.5**

(22) Anmeldetag: **23.07.81**

(60) Veröffentlichungsnummer der früheren Anmeldung nach Art. 76 EPÜ: **0 046 875**

(54) **Servo-Einheit zur Betätigung von zu einem Flugsteuerungs-System gehörenden Steuerflächen oder dgl.**

(30) Priorität: **02.09.80 DE 3032918**
**25.03.81 DE 3111722**

(43) Veröffentlichungstag der Anmeldung:
**25.05.88 Patentblatt 88/21**

(45) Bekanntmachung des Hinweises auf die Patenterteilung:
**17.06.92 Patentblatt 92/25**

(84) Benannte Vertragsstaaten:
**FR GB IT SE**

(56) Entgegenhaltungen:
**GB-A- 2 030 334**
**US-A- 3 688 099**
**US-A- 4 120 469**
**US-A- 4 159 444**
**US-A- 4 217 486**

(73) Patentinhaber: **Deutsche Airbus GmbH**
**Kreetslag 10**
**W-2103 Hamburg 93(DE)**

(72) Erfinder: **Wendt, Hans-Joachim, Ing. (grad.)**
**Harburger Strasse**
**W-2150 Buxtehude(DE)**

EP 0 268 041 B1

Rank Xerox (UK) Business Services

# Beschreibung

Die Erfindung bezieht sich auf eine Servo-Einheit der im Oberbegriff des Patentanspruchs 1 angegebenen Art.

Servo-Einheiten dieser Art werden verwendet, um die Steuerflächen eines Flugzeuges zu betätigen und weisen üblicherweise einen Elektromotor oder einen hydraulischen Antrieb auf und reagieren auf Signale, die von dem übergeordneten Flugsteuerungssystem ausgehen. Die erfindungsgemäße Servo-Einheit umfaßt eine digitale Schaltelektronik und kann daher von einem digitalen Flugsteuerungssystem angesteuert werden.

Ein derartiges digitales Flugsteuerungssystem ist beispielsweise der US-A-4 217 486 zu entnehmen. Dieses stellt praktisch eine auf zwei Prozessoren mit zugeordneten Speichern basierende digitale Rechnerschaltung dar, wobei der Datenverkehr der Speicher jeweils über einen eigenen DMA-Kontroller abgewickelt wird. Diese Schaltung weist ferner eine Eingabe- und eine Ausgabeeinheit auf, wobei alle genannten Funktionseinheiten miteinander sowohl über einen Adress- und Datenbus als auch über einen DMA-Steuerbus in Verbindung stehen. Die Eingabe-Einheit steht dabei mit analogen Sensoren und digitalen Einheiten in Verbindung, wodurch beispielsweise die Lage des Flugzeuges und weitere für die Flugsteuerung wichtige Flugparameter erfaßt und an das Flugsteuerungssystem weitergeleitet werden. Hierzu gehören auch Sensoren zur Erfassung der vom Piloten ausgeführten Steuerbewegungen. Die genannte Ausgabeeinheit umfaßt im wesentlichen Digital/Analogwandler zur Ansteuerung der angeschlossenen Servo-Einheiten.

Aufgrund der Doppelanordnung der Prozessoren mit den Speichern ist es möglich, Fehlfunktionen, verursacht durch Versagen eines Prozessors oder eines Speichers, zu erkennen und den betreffenden defekten Teil der Schaltung automatisch abzuschalten.

Durch diese Fehlererkennungslogik wird vermieden, daß das Flugzeug aufgrund eines innerhalb des digitalen Flugsteuerungssystems auftretenden Defektes in einen vom Piloten nicht mehr beherrschbaren Flugzustand übergeht. Das Erkennen einer Fehlfunktion und das Abschalten eines defekten Elementes geschieht unter Auswertung des momentanen Inhalts der beiden Speicher. Die Folgen von außerhalb des Steuerungssystems auftretenden Defekten können durch diese Lösung nicht beeinflußt werden.

Demgemäß liegt der Erfindung die Aufgabe zugrunde, eine gattungsgemäße Servo-Einheit derart auszubilden, daß diese beispielsweise bei Ausfall einer bestimmten Steuerfläche automatisch ein auf diesen Fall richtig reagierendes, vorher festgelegtes Verhalten zeigt, also einem abgespeicherten Programm folgt.

Diese Aufgabe wird bei einer gattungsgemäßen Servo-Einheit dadurch gelöst, daß diese mit dem Flugsteuerungssystem digital korrespondierende elektronische Funktionseinheiten einschließlich eines Programmspeichers zur Abspeicherung von Notprogrammen umfaßt.

In dem Programmspeicher können Notprogramme abgespeichert werden, die bei Versagen bestimmter Elemente des Steuerungssystems aufgerufen werden, um seitens bestimmter Servo-Einheiten ein den Schaden ausgleichendes Verhalten zu veranlassen. Als Stellglieder der Servo-Einheiten kommen sowohl hydraulische als auch elektrische Antriebe in Frage.

Die Erfindung ist in der Zeichnung dargestellt und in der Beschreibung näher erläutert. Es zeigen:

Fig. 1 eine Übersicht über ein digitales Steuerungs-System für ein Flugzeug;
Fig. 2 eine Schaltung eines Hauptsteuerkreises;
Fig. 3 eine optische Einrichtung zur Stellungsabtastung einer Steuersäule;
Fig. 4 ein Blockschaltbild eines Kraftsimulators;
Fig. 5 eine Schaltung einer Mischereinheit;
Fig. 6 ein Blockschaltbild eines optronischen Informationssystems;
Fig. 7 ein Blockschaltbild einer Servo-Einheit;
Fig. 8 ein Anzeige- und Bediengerät;
Fig. 9 ein Blockschaltbild eines Dialog-Gerätes;

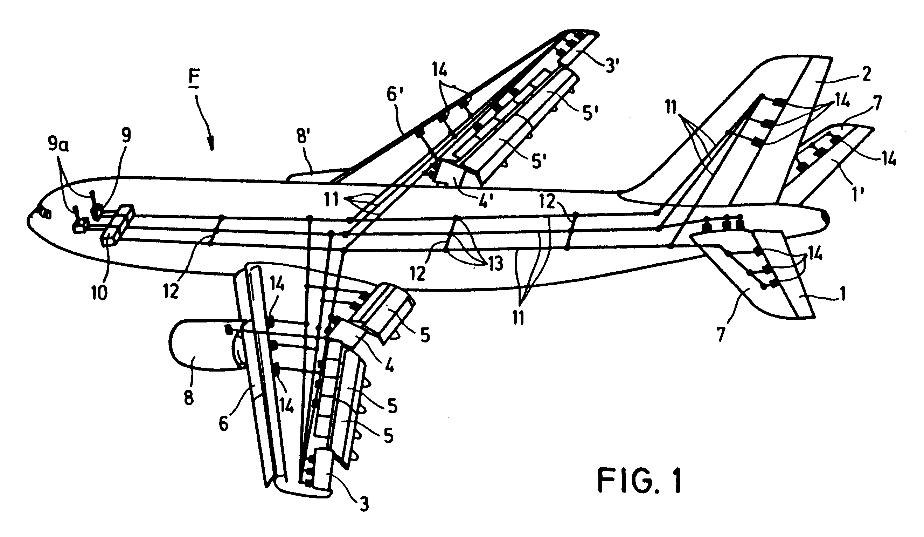

Fig. 1 zeigt eine Übersicht über die Anordnung zur Übertragung von Steuersignalen für ein Flugzeug F. Das Flugzeug F weist die üblichen Steuerflächen auf, und zwar zwei Höhenruder 1, 1', ein Seitenruder 2, zwei Langsamflug-Querruder 3, 3', zwei Schnellflug-Querruder 4, 4', Landeklappen 5, 5', Nasenklappen 6, 6' und eine Höhenflosse 7. Zum Flugzeug F gehören u. a. die Triebwerke 8, 8' sowie die Steuerorgane 9, wobei die schematische Darstellung die Steuersäulen 9 a und Pedale andeutet. Das Leitungssystem zur Übertragung von Steuersignalen weist hauptsächlich mehrere Signalprozessoren 10 und ein aus Längsleitungen 11 und Querleitungen 12 bestehendes mehrfach vermaschtes Netzwerk aus Lichtleitern auf, das mit adressierbaren Servo-Einheiten 14 in Verbindung steht. Knotenpunkte 13 bestehen dabei aus Verzweigungen bekannter Art, z. B. in Form von Stern- oder T-Kopplern. Die Steuerorgane 9 sind derart ausgeführt, daß sie ein dem Steuerbefehl entsprechendes digitales Lichtsignal liefern. Die an der Peripherie des Netzwerkes angeordneten Servo-Einheiten 14 verfügen über Einrichtungen zur Umwandlung des ankommenden Lichtsignals in eine Steuerbewegung. Außerdem weisen sie Einrichtungen auf, die die momentane Stellung z. B. eines Ruders ermitteln und ein entsprechendes Lichtsignal an die Längsleitungen 11 abgeben. Der zwischen den Signalprozessoren 10 und den über die Längsleitungen 11 angeschlossenen peripheren Geräten ablaufende Datenverkehr wird zyklisch durchgeführt, d. h. die Signalprozessoren 10 geben in festem Abfragetakt adressierte Informationssignale z. B. an die Servo-Einheiten 14 ab, die diese wiederum mit adressierten Informationssignalen beantworten. Der hierbei ablaufende Datenverkehr ist in Form von Telegrammen mit fester Wortlänge definiert. Diese Telegramme sind einer Trägerfrequenz in Form einer digitalen Frequenzmodulation aufgeprägt, wobei das Lichtsignal letztlich eine der Trägerfrequenz entsprechende Amplitudenmodulation aufweist. Hierdurch wird eine sehr hohe Störsicherheit gegenüber eventueller Fremdlichteinstreuung erreicht. Aufgrund der Vermaschung ist sichergestellt, daß das Signal auf vielen Wegen von den Signalprozessoren 10 zu der angesprochenen Servo-Einheit 14 gelangt, wodurch die Zuverlässigkeit des Systems weiter erhöht wird. Das dargestellte System ist dreifach ausgeführt, d. h. im Rumpf, im Flügel sowie in den Leitwerken sind drei Längsleitungen 11 mit entsprechenden Querleitungen 12 angeordnet und pro Ruder, Steuerfläche oder dgl. sind drei Servo-Einheiten 14 vorgesehen. Die Signalprozessoren 10 enthalten den Hauptsteuerkreis der gesamten Anordnung. Auch diese Einheit ist zur Steigerung der Zuverlässigkeit dreifach ausgeführt.

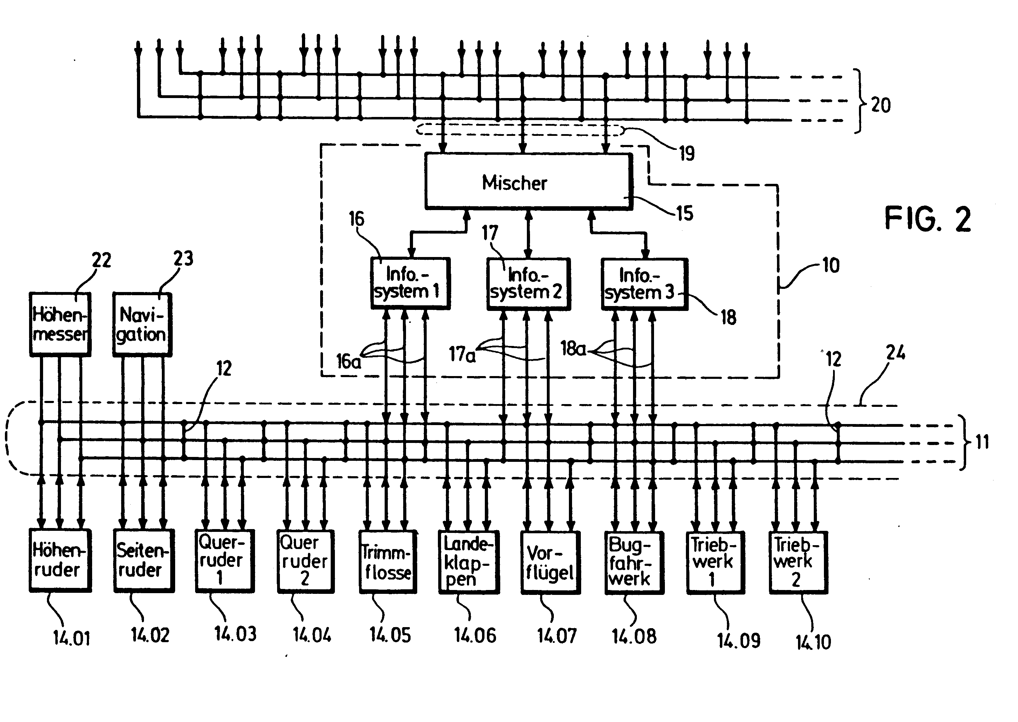

Fig. 2 zeigt die Schaltung von einem der Signalprozessoren 10, die im wesentlichen aus einem Mischer 15 und drei Informationssystemen 16, 17 und 18 besteht. Über dreifach ausgeführte Lichtleitungen 19 ist der Mischer 15 mit einem vermaschten Geber-Netzwerk 20 aus Lichtleitern verbunden. Der dreifache Ausgang des Mischers 15 ist mit je einer der Informations-Einheiten 16 bis 18 verbunden. Jede Einheit 16 bis 18 weist weiterhin je drei Anschluß-Lichtleitungen 16a bis 18a auf, die jeweils mit dem Netzwerk 24 aus den Längsleitungen 11 und Querleitungen 12 in Verbindung steht. Der Mischer 15 übernimmt hier die Aufgabe, die z. B. von der Steuersäule kommenden digitalen Lichtsignale so aufzubereiten, daß diese unter logischer Berücksichtigung weiterer Informationen an die Informationssysteme 16 bis 18 weitergeleitet werden. Werden dem Mischer 15 z. B. ein Signal, das einer vorgegebenen Soll-Flughöhe entspricht und ein weiteres von einem Höhenmesser 22 geliefertes Signal, das der Ist-Höhe entspricht, zugeführt, so bildet der Mischer 15 ein zur Einstellung der Soll-Flughöhe dienendes Differenz-Signal, das über die Informationssysteme 16 bis 18 in das Netzwerk 24 eingegeben wird. Dieses an die Servo-Einheit 14.01 des Höhenruders adressierte Telegramm wird nun von dieser Einheit aufgenommen und in einen entsprechenden Ausschlag des Ruders 1 umgesetzt, der das Flugzeug ohne Einwirkung des Piloten wieder in die Soll-Flughöhe zurückführt. Auf die gleiche Weise können von einem Navigationsgerät 23 gelieferte Kurs-Istwerte durch den Mischer 15 mit einem vorgegebenen Soll-Kurs verglichen werden. Das hierbei entstehende Differenz-Signal wird in einen an die Servo-Einheit 14.02 des Seitenruders 2 und an die Servo-Einheiten 14.03 und 14.04 der Querruder 3 adressierten Steuerbefehl umgewandelt und über die Informationssysteme 16, 17 und 18 und weiter über das Netzwerk 24 den genannten Servo-Einheiten zugeführt. Diese antworten mit einem Ruderausschlag, der die erforderliche Kurskorrektur bewirkt. Ein über das Geber-Netzwerk 20 an den Mischer 15 angeschlossenes nicht dargestelltes Anzeige- und Bediengerät dient u. a. der graphischen Darstellung der Soll-und Istwerte unter Verwendung üblicher Sinnbilder. Wird die Anordnung auf manuellen Betrieb umgeschaltet, so entfällt der Soll-Istvergleich durch den Mischer und die über das Geber-Netzwerk 20 ankommenden Steuerbefehle werden direkt in Form entsprechender Telegramme an die betreffenden Servo-Einheiten weitergeleitet. An das Geber-Netzwerk 20 sind alle einen Steuerbefehl abgebenden Steuerorgane 9, wie Steuersäulen, Pedale, Trimmrad usw. über einen dreifach ausgeführten Lichtleiter angeschlossen. Bei den vorbeschriebenen Abläufen besteht die Aufgabe der Informationssysteme 16 bis 18 im wesentlichen darin, den Verkehr der in die Mischereinheit 15 ein- und auslaufenden Daten durch einen bestimmten Takt zu steuern und die Befehls- bzw. Abfragetelegramme mit den entsprechenden Adressen zu versehen.

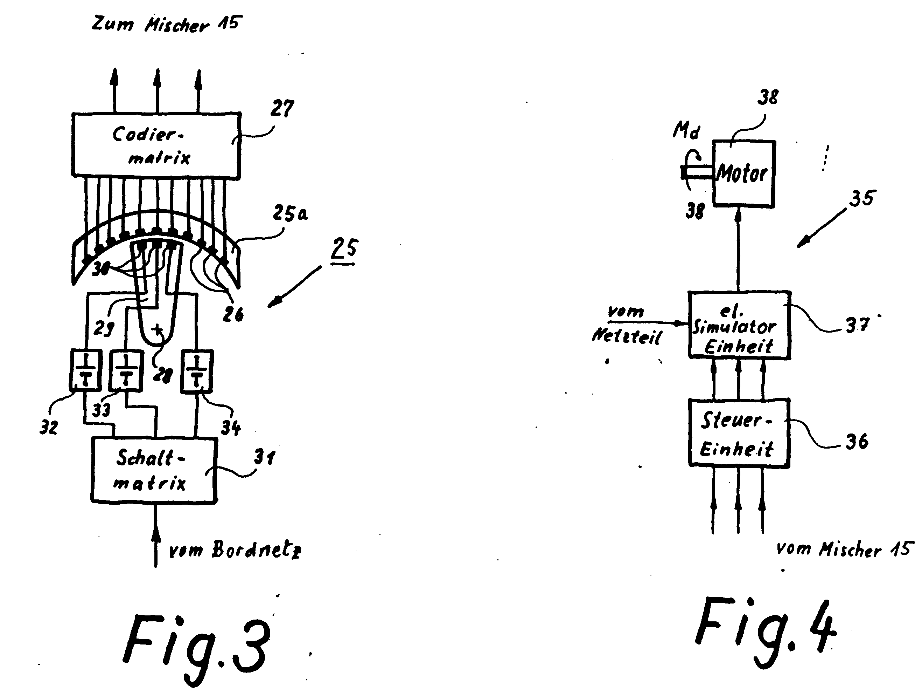

Fig. 3 zeigt die Prinzipdarstellung einer optronischen Einrichtung 25 zur Stellungsabtastung der Steuersäule 9a, die als Signalgeber funktioniert. Sie besteht im wesentlichen aus einem bogenförmigen festen Teil 25 a mit auf dessen Innenseite angeordneten Lichtempfänger-Dioden 26, die jeweils mit dem Eingang einer Codiermatrix 27 verbunden sind. Dem festen Teil 25 a steht auf dessen Innenseite ein um einen Punkt 28 drehbares segmentförmiges Teil 29 derart gegenüber, daß der Punkt 28 mit dem Mittelpunkt der inneren Kontur des Teils 25 a zusammenfällt und ein Bereich des drehbaren Teils 29 mit dem festen Teil 25a einen bogenförmigen Spalt mit dem Mittelpunkt 28 bildet. In der bogenförmigen Randfläche des drehbaren Teils 29 sind Lichtsender-Dioden 30 derart angeordnet, daß das von diesen abgegebene Licht direkt von den Dioden 26 aufgenommen wird. Die Lichtsender-Dioden 30 stehen mit einer Schaltmatrix 31 in Verbindung, die vom Bordnetz mit Strom versorgt wird, es sind jedoch drei Pufferbatterien 32, 33 und 34 vorgesehen. Die Schaltmatrix 31 liefert ein bestimmtes elektrisches Impulsmuster, wodurch die Dioden 30 bestimmte digitale Lichtimpulse aussenden. Das bewegliche Teil 29 ist derart mit der Steuersäule 9a verbunden, daß es deren Bewegungen in Fester Abhängigkeit folgt. Dabei nehmen die Empfänger-Dioden 26 ein Lichtsignal auf, das der jeweiligen Stellung der Steuersäule entspricht. Dieses Signal wird von der Codiermatrix 27 in ein digitales Lichtsignal umgewandelt, das durch den Mischer 15 laufend abgefragt wird. Falls die bordnetzabhängige Stromversorgung der Dioden ausfallen sollte, wird die entsprechende Energie durch die Pufferbatterien 32 bis 34 geliefert. Der Signalgeber arbeitet um so genauer, je mehr Dioden pro Bogeneinheit untergebracht sind. Eine Steigerung der Genauigkeit ist weiterhin dadurch erreichbar, daß das bewegliche Teil 29 über ein Übersetzungsgetriebe bekannter Art angetrieben wird. Durch eine logische Schaltung kann erreicht werden, daß die Ablesung durch die Codiermatrix auch dann noch eindeutig ist, wenn eine der drei Lichtsender-Dioden 30 während des Betriebes ausfallen sollte. Nach der Erfindung können auch die anderen Steuerorgane wie Pedale, Trimmrad usw. mit optronischen Einrichtungen 25 der vorbeschriebenen Art ausgerüstet sein. Die Vertauschung der Lichtsender- und Empfängerdioden ergibt eine weitere Variante der optronischen Einrichtung 25.

Fig. 4 zeigt ein Blockschaltbild eines Kraftsimulators 35. Derartige Einrichtungen zur Simulation der Ruderkräfte sind an sich bekannt und basieren meist auf recht komplizierten mechanischen Getrieben. Die hier gezeigte Lösung arbeitet elektromagnetisch und wird über Lichtleiter angesteuert.

Der Kraftsimulator 35 besteht im wesentlichen aus einer Steuer-Einheit 36, einer elektronischen Simulator-Einheit 37 und einem Elektromotor 38. Der vorbeschriebene Mischer 15 liefert per Lichtleiter an den Kraftsimulator 35 adressierte Signale, die der Fluggeschwindigkeit entsprechen. Diese Signale werden von der Steuereinheit 36 selektiv empfangen und als elektrische Digital-Signale an die elektronische Simulator-Einheit 37 weitergeleitet. Diese gibt aufgrund einer flugzeugbezogenen fest programmierten Funktionsgleichung in Abhängigkeit von der Fluggeschwindigkeit und vom jeweiligen Ruderausschlag eine bestimmte elektrische Leistung an den Motor 38 ab. Diese liefert bei Stillstand über eine Welle 38 a ein entsprechendes Drehmoment $M_{d'}$ das direkt z. B. auf die Steuersäule 9a derart einwirkt, daß hier eine für den Piloten fühlbare Kraft auftritt, die den Ruderkräften in sinnvoller Weise entspricht. Aufgrund des in der Simulator-Einheit 37 abgespeicherten Programms wird die Richtung des Drehmomentes umgekehrt, wenn die Steuersäule 9a die Neutrallage durchfährt. Die der Fluggeschwindigkeit entsprechenden in den Mischer 15 eingegebenen Signale werden z. B. vom Meßergebnis eines nicht dargestellten Staurohres über einen Analog-Digital-Wandler abgeleitet und über eine zugeordnete adressierbare Steuer-Einheit in Form eines digitalen Lichtsignals in das Geber-Netzwerk 20 eingespeist.

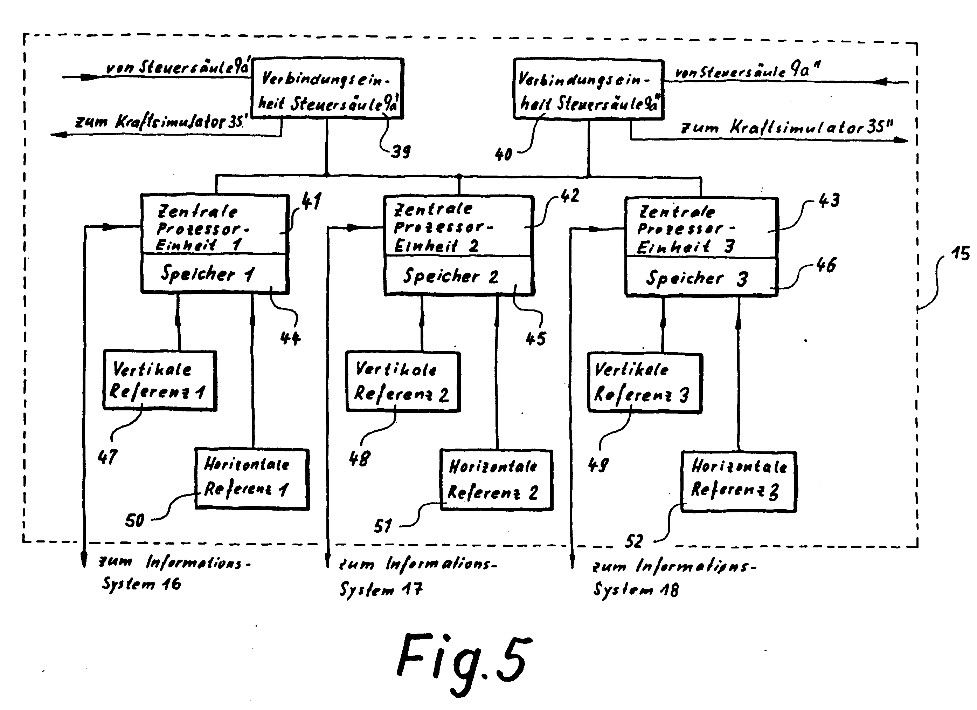

Fig. 5 zeigt die innere Schaltung eines Mischers 15 mit zwei je einer Steuersäule 9a zugeordneten Verbindungseinheiten 39 und 40 mit drei zentralen Prozessor - Einheiten 41, 42, 43, denen jeweils ein Speicher 44, 45 und 46 zugeordnet ist. Der Mischer 15 weist weiterhin für jedes Organ, das einen Steuerbefehl abgeben kann, eine entsprechende, hier nicht gezeigte Verbindungseinheit auf. Der Mischer 15 weist weiterhin pro Speicher je eine vertikale Referenz 47, 48, 49 und eine horizontale Referenz 50, 51, 52 auf. Zur Verbindung mit den Steuersäulen 9a und Kraftsimulatoren 35 dienen Lichtleiter. Die einzelnen internen Funktions-Einheiten des Mischers 15 sind entsprechend Fig. 5 durch elektrische Leitungen miteinander verbunden. Die Verbindungen mit den Informationssystemen 16 bis 18 erfolgen ebenfalls über elektrische Leitungen. Die z. B. von der Steuersäule 9a kommenden codierten Signale gelangen in die Verbindungs-Einheit 39, die ihrerseits im wesentlichen aus Verstärkern und Codewandlern besteht. Hier werden die genannten Signale verstärkt sowie umkodiert und auf den mischerinternen Datenbus geleitet, der mit den zentralen Prozessor-Einheiten 41, 42 und 43 in Verbindung steht. Eine Prioritätsschaltung innerhalb der Verbindungseinheiten sorgt dafür, daß die Signale der Steuersäule 9a' so lange Priorität haben, bis durch Bedienung die Steuersäule 9a'' eingeschaltet wird und diese dann die Führung übernimmt. In den Speichern 44, 45 und 46 werden die von den Referenzen 47 bis 49 und 50 bis 52 gelieferten, der Istlage des Flugzeuges entsprechenden Daten gespeichert und über die Prozessor-Einheiten 41 bis 43 miteinander verglichen. Hierbei werden diejenigen Daten als richtig erkannt, die in der Mehrzahl der Prozessor-Einheiten 41 bis 43 übereinstimmend vorliegen. Die Prozessor-Einheit mit abweichender Information wird als fehlerhaft erkannt und über den mischerinternen Datenbus gesperrt. Dies geschieht mittels eines speziellen Fehlercodesignals. Die Prozessor-Einheiten 41 bis 43 sind es auch, die die erforderlichen Operationen für die vorerwähnte automatische Flugführung ausführen. Ein entsprechender Prozessor ist z. B. unter der Bezeichnung PDP 11/70 bekannt. Entsprechend Fig. 1 verfügt die gesamte Anordnung über drei Signal-Prozessoren 10 und damit auch über drei Mischer 15, was eine entsprechende Steigerung der Zuverlässigkeit bewirkt.

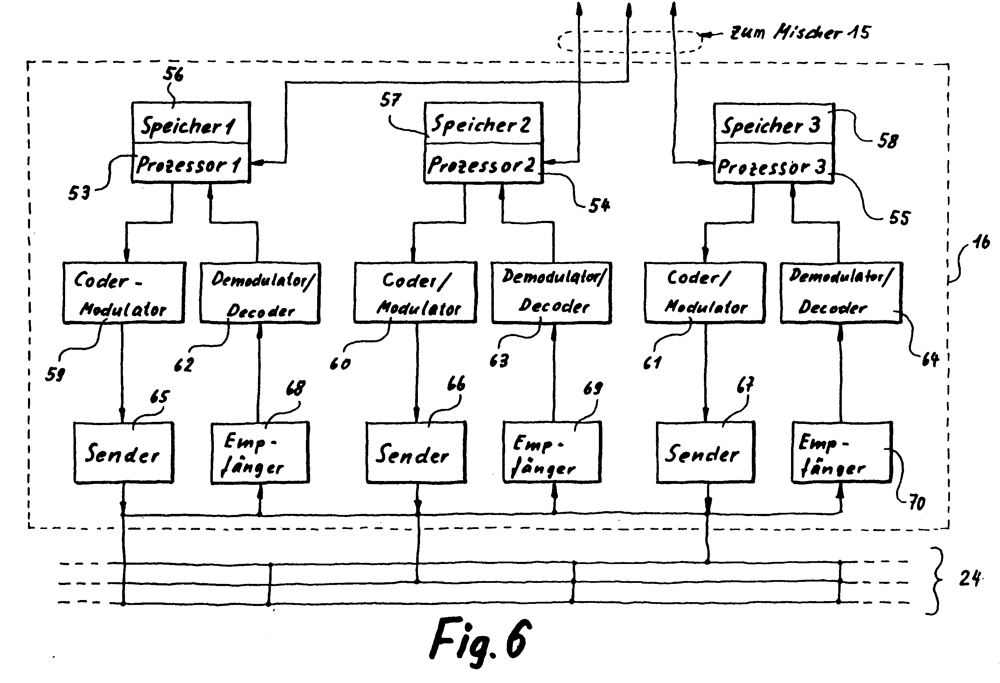

Fig. 6 zeigt ein Blockschaltbild eines optronischen Informationssystems, wie es in dreifacher Ausführung nach Fig. 2 innerhalb des Signal-Prozessors 10 mit den Positionen 16, 17 und 18 vorgesehen ist. Das dargestellte System weist drei Prozessoren 53, 54, 55 mit drei Speichern 56, 57, 58, drei Coder/Modulatoren 59, 60, 61, drei Demodulator/Decodern 62, 63, 64, drei Sendern 65, 66, 67 und drei Empfängern 68, 69, 70 auf, die miteinander verbunden sind. Wesentlicher Bestandteil der Sender 65 bis 67 ist jeweils eine Laserdiode, die ein Lichtsignal an das Netzwerk 24 abgeben kann. Die Empfänger bestehen im wesentlichen aus je einem Silizium-Fototransistor, der als Detektor für über das Netzwerk 24 ankommende Lichtsignal dient, d. h. diese wieder in elektrische Signale umwandelt. Das gezeigte Informationssystem besteht zur Steigerung der Zuverlässigkeit aus drei Zweigen, die in Parallelschaltung arbeiten. Zur Erläuterung der Wirkungsweise wird zunächst nur der links gezeigte Zweig, bestehend aus dem Prozessor 53 mit dem Speicher 56 sowie dem Coder/Modulator 59, dem Demodulator/Decoder 62, dem Sender 65 und dem Empfänger 68, betrachtet. Diese Schaltung steuert den zwischen dem Netzwerk 24 und dem Mischer 15 ablaufenden Datenverkehr, wobei ein in den Prozessor 53 integrierter Oszillator als Taktgeber fungiert. Ein aus dem Mischer 15 zum Prozessor 53 gelangendes elektrisches Signal wird dem Coder/Modulator 59 zugeführt. Innerhalb des Coder-Teils wird das Datentelegramm von der prozessorbezogenen in die peripheriebezogene Wort- und Adress-Struktur umgewandelt. Anschließend durchläuft das Telegramm den Modulatorteil, wo es einem hochfrequenten Träger in Form einer Frequenzmodulation aufgeprägt wird. Der entsprechende reine Dateninhalt wird dann in einem Zwischenschritt durch Demodulation zurückgewonnen und einem festen anderen Träger durch Amplitudenmodulation aufgeprägt. Das so entstandene Signal wird innerhalb des Senders 65 verstärkt und der Laserdiode zugeführt, die ein dem Diodenstrom analoges Lichtsignal an das Netzwerk 24 abgibt. In umgekehrter Richtung wird ein über das Netzwerk 24 ankommendes Lichtsignal vom Empfänger 68 aufgenommen und durch den eingebauten Fototransistor in ein amplitudenmoduliertes elektrisches Signal zurückverwandelt, das dann zum Demodulator/Decoder 62 gelangt.

Am Ausgang des Demodulators/Decoders 62 liegt dann wieder ein Datentelegramm in prozessorbezogener Struktur vor, das nun durch den Prozessor 53 weiterverarbeitet wird. Die beiden anderen Zweige des Systems führen im gleichen Takt die gleichen Operationen aus, wobei der synchronisierende Impuls von Taktgeber des Prozessors 53 ausgeht. Sollte dieser Taktgeber ausfallen, so wird der links dargestellte Zweig automatisch abgeschaltet und der nächst vorgesehene Taktgeber steuert die Synchronisation . Auch die weiterhin nach Fig. 2 vorgesehenen Informationssysteme 17 und 18 werden im Normalfall durch den Prozessor 53 synchronisiert. Der entsprechende Sychronisier-Impuls wird über das Netzwerk 24 geleitet.

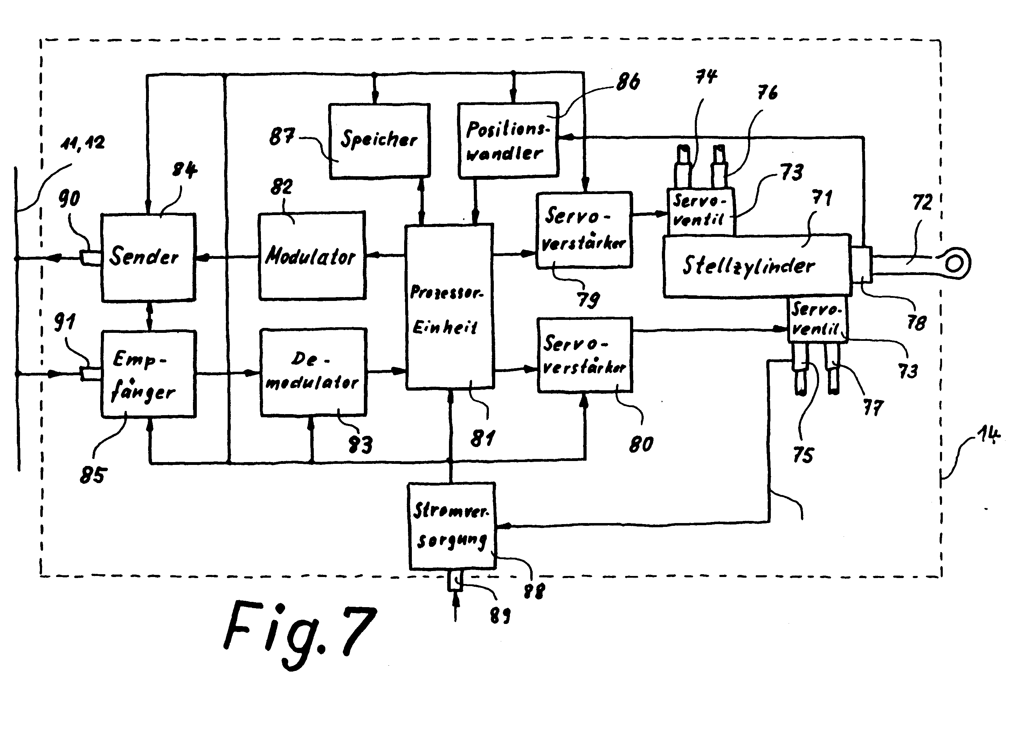

Fig. 7 zeigt das Blockschaltbild einer Servo-Einheit 14, z. B. zur Betätigung des Höhenruders 1, die einen mechanischen und einen elektronischen Teil aufweist. Der mechanische Teil besteht hier im wesentlichen aus einem Stellzylinder 71, einer Schubstange 72 und zwei Servo-Ventilen 73. Der elektronische Teil umfaßt zwei Servoverstärker 79 und 80, eine Prozessor-Einheit 81, einen Modulator 82, einen Demodulator 83, einen Sender 84, einen Empfänger 85, einen Positionswandler 86, einen Speicher 87 und ein Stromversorgungsteil 88, die miteinander verbunden sind. Die vorgenannten Funktionseinheiten bestehen vorwiegend aus integrierten Schaltkreisen und sind vorteilhaft in einer Elektronik-Kammer des Gehäuses vom Stellzylinder 71 angeordnet. Hierdurch bildet der eigentliche Stellzylinder 71 mit dem elektronischen Teil die neuartige zusammenhängende Servo-Einheit 14, die außer den hydraulischen Druck- (74, 75) und Rücklauf- (76, 77) Leitungen einen Anschluß 89 für die Stromversorgung und zwei Lichtleiter-Anschlüsse 90 und 91 aufweist. Ein über den Lichtleiter 11 ankommendes von den Informationssystemen 16, 17, 18 an den Stellzylinder 71 adressiertes Lichtsignal wird vom Empfänger 85 in ein elektrisches Signal umgewandelt und dem Demodulator 83 zugeführt, der von diesem Signal das ursprüngliche Datentelegramm ableitet und in die Prozessoreinheit 81 eingibt, die über einen eingebauten Decoder verfügt, der das Telegramm auf den eigenen Abfragezyklus umsetzt und auf einen internen Datenbus schaltet. Im Speicher 87 sind verschiedene, mögliche Betätigungsprogramme des Stellzylinders 71 abgespeichert. Aufgrund des Telegramms wird nun ein bestimmtes Programm aus dem Speicher 87 zur Steuerung der Servoverstärker 79 und 80 aufgerufen, die ihrerseits eine elektrische Ansteuerung der Servoventile 73 bewirken. Diese steuern den Zu- und Rückstrom der Druckflüssigkeit derart, daß die Schubstange 72 dem hier nicht dargestellten Höhenruder 1 den Bewegungsablauf erteilt, der dem abgerufenen Programm entspricht. Der Speicher 87 kann als Halbleiter oder magnetischer Blasenspeicher ausgeführt sein. Die adressierbaren Programme sind in Form mathematischer Funktionen abgespeichert, die sowohl schnelle oder langsame als auch lineare oder nichtlineare Ruderausschläge erlauben. Mittels der abgespeicherten Funktionen können unterschiedliche Steuerungsanforderungen erfüllt werden. So ist es beispielsweise möglich, die Ruderausschläge der jeweiligen Fluggeschwindigkeit anzupassen. Weiterhin ist es möglich, bestimmte Notprogramme abzuspeichern, wodurch der Ausfall wichtiger Ruder ausgeglichen werden kann. So ist es z. B. denkbar, den Ausfall eines Querruders 3 dadurch auszugleichen, daß man antisymmetrische Höhenruderausschläge gibt oder den Ausfall des Seitenruders 2 dadurch auszugleichen, daß die auf der Innenseite der beabsichtigten Kurve liegenden Querruder 3 und 4 bzw. 3′ und 4′ gegensinnig ausgeschlagen werden. Eine andere aufgrund der Erfindung neuartige Möglichkeit besteht darin, daß z. B. eine auf den Tragflügel wirkende einseitige Böenlast durch einen schnellen einseitigen Querruderausschlag kompensiert wird. Hierzu wird jeweils das Querruder herangezogen, das dem Lastangriff am nächsten liegt. Derartige Reaktionen können z. B. durch Signale von im Flügel angeordneten Beschleunigungsmessern üblicher Art eingeleitet werden. Die vorbeschriebenen Beispiele deuten nur an, welche vorteilhaften Wirkungen mit der Anordnung bei entsprechender Programmierung noch möglich sind. Der Stellungsgeber 78 liefert ein der jeweiligen Stellung der Schubstange 72 entsprechendes Signal an den Positionswandler 86, der im wesentlichen aus einem Analog-Digital-Wandler besteht. Die von diesem gelieferten Signale werden der Prozessor-Einheit 81 zugeführt, wo sie zur Kontrolle des zu fahrenden Programms herangezogen werden. Weiterhin gelangen entsprechende Datentelegramme per Abfrage laufend über den Modulator 82, den Sender 84 und den Lichtleiter 11, 12 zu den Informationssystemen 16, 17, 18, die somit die Betriebsfähigkeit der Servo-Einheit 14 kontrollieren können.

Der Speicher 87 enthält nach obigem verschiedene vom Stellzylinder 71 (oder z. B. von einem elektrischen Servomotor) auszuführende Betätigungsprogramme und dient gleichzeitig auch zu deren Überwachung aufgrund der vom Stellungsgeber 78 gelieferten Signale. Derartige Speicher werden auch "intelligente Speicher" genannt. Als Prozessor-Einheit 81 kommt z. B. der bekannte Baustein INTEL 8080 in Betracht.

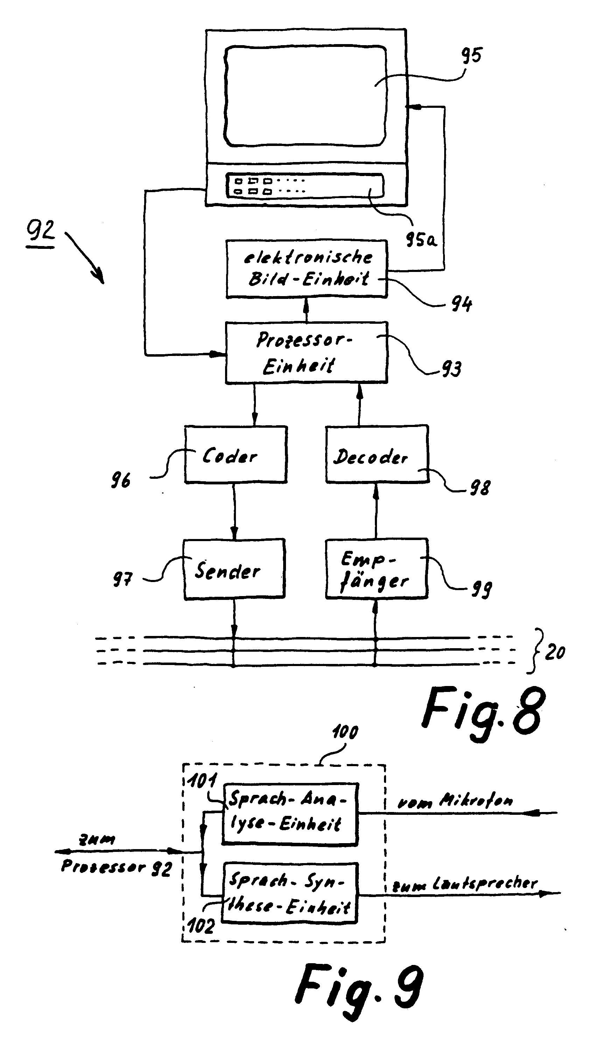

Fig. 8 zeigt ein Blockschaltbild eines Anzeige- und Bediengerätes 92. Das Gerät weist eine Prozessor-Einheit 93, eine elektronische Bild-Einheit 94, einen Bildschirm 95, eine Tastatur 95a, einen Coder 96, einen Sender 97, einen Decoder 98 und einen Empfänger 99 auf, die miteinander verbunden sind. Der Sender 97 und der Empfänger 99 stehen über Lichtleiter mit dem Geber-Netzwerk 20 in Verbindung. Über die alphanumerische Tastatur 95a, die z. B. nach ASCI-Code (American Standard Code for Information Interchange) arbeitet, erfolgt die Eingabe von Betriebsdaten in das Geber-Netzwerk 20. Für feste Betriebsarten stehen bestimmte mit entsprechenden Symbolen versehene Wahltasten zur Verfügung. Hier können z. B. die Grundbetriebsarten wie manuelle (MANOP), halbautomatische (SEMOP) oder automatische (AUTOP) Steuerung gewählt werden. Dabei hat die Prozessor-Einheit 93 u. a. die Aufgabe, die von der Tastatur 95a gelieferten Signale derart aufzubereiten, daß diese in Form abgefragter Datentelegramme über den Coder 96 und den Sender 97 per Lichtleiter zu dem Mischer 15 gelangen. Der Bildschirm 95 steht über die elektronische Bild-Einheit 94 mit der Prozessor-Einheit 93 in Verbindung. Die Bild-Einheit 94 umfaßt im wesentlichen einen Signalgenerator und eine Codewandlermatrix, wie sie üblicherweise zur Bilddarstellung verwendet werden. Eine derartige Schaltung ist aus Klein: "Mikrocomputersysteme", Francis Verlag, München, 1979, 2. Aufl. S. 32 bekannt. Der Bildschirm 95 ist als Halbleiter-Bildschirm ausgeführt und dient sowohl zur Darstellung der aktuellen Lage des Flugzeuges F als auch zur Darstellung vorgenommener Steuerkorrekturen. Der Signalgenerator der Bild-Einheit 94 dient hierbei zur Aufbereitung der sinnbildlichen Darstellung von Lage- und Kursinformationen (Balken, Kurszahlen), zur Anfertigung alphanumerischer Zeichen nach ASCI-Code und zur Aufbereitung der Symbole für die Steuerbefehle. Die Codewandlermatrix steuert die Punktmatrixfelder des Bildschirms 95, so daß die im Code des Signalgenerators vorliegenden digitalen Signale in die entsprechenden Darstellungen umgesetzt werden. Die gesamte Anordnung weist drei der vorbeschriebenen Anzeige- und Bediengeräte 92 auf, die über das Geber-Netzwerk 20 mit den Mischern 15 korrespondieren. Dadurch verfügen beide Piloten und der Flugingenieur jeweils über ein eigenes Anzeige- und Bediengerät 92, wobei die jeweils gezeigten Darstellungen und ausgeführten Bedienungsmaßnahmen in der Regel infolge der unterschiedlichen Aufgabe der Bedienpersonen völlig verschieden sind. Auch hier sind die Möglichkeiten, die sich durch entsprechende Programmierung der gezeigten Schaltung ergeben, nur angedeutet.

Fig. 9 zeigt ein Blockschaltbild eines Dialog-Gerätes 100, mit dem sich eine sinnvolle Ausgestaltung der Anordnung ergibt. Das Dialog-Gerät 100 besteht im wesentlichen aus einer Sprach-Analyse-Einheit 101, die mit einem Mikrofon in Verbindung steht und einer Sprach-Synthese-Einheit 102, die mit einem Lautsprecher verbunden ist. Das Dialog-Gerät 100 korrespondiert mit der Prozessor-Einheit 93 des Anzeige- und Bediengerätes 92 nach Fig. 8 und erlaubt einen sprachlichen Dialog der Bedienperson mit der beschriebenen Anordnung. Hierbei werden die per Sprache über das Mikrofon eingegebenen Code-Wörter durch die Sprach-Analyse-Einheit anhand eines hier abgespeicherten Silbenschatzes erkannt und in Form entsprechender digitaler Telegramme in die Prozessor-Einheit 93 eingegeben. Dies geschieht unter Verwendung eines sog. PROM-Sprachdecoders (PROM = Programed read only memory). Umgekehrt kann jetzt eine für die Bedienperson wichtige Information über den Lautsprecher ausgegeben werden. Dabei erfolgt die Sprach-Synthese innerhalb der Einheit 102 durch einen PROM-Sprachcoder, der die von der Prozessor-Einheit 93 gelieferten Telegramme aufschlüsselt und die entsprechend auszugebenden Worte aufgrund eines hier abgespeicherten Silbenschatzes zusammenstellt und diese tonfrequenten Signale dem Lautsprecher über einen hier nicht gezeigten Leistungsverstärker zuführt.

Die bei dem vorstehend beschriebenen System über die vermaschten Lichtleiter-Netzwerke 20 und 24 ausgetauschten Lichtsignale sind nicht auf die beschriebene Modulationsart beschränkt, vielmehr sind je nach Anwendung auch andere Modulationsarten, wie Pulsfrequenz-Modulation (PFM) oder Pulscode-Modulation (PCM), möglich.

**Patentansprüche**

1. Servo-Einheit zur Betätigung von zu einem Flugsteuerungs-System gehörenden Steuerflächen oder dgl., wobei das Flugsteuerungssystem im wesentlichen eine mindestens auf zwei Prozessoren mit jeweils zugeordneten Speichern basierende digitale Rechnerschaltung darstellt, wobei Fehlfunktionen der Schaltung aufgrund einer Fehlererkennungslogik feststellbar und defekte Teile der Schaltung automatisch abschaltbar sind und die Schaltung ferner eine Eingabe- und eine Ausgabeeinheit aufweist, wobei alle genannten Funktionseinheiten miteinander sowohl über einen Adress- und Datenbus als auch über einen DMA-Steuerbus in Verbindung stehen, dadurch **gekennzeichnet,** daß die Servo-Einheit (14) mit dem Steuerungssystem digital korrespondierende elektronische Funktionseinheiten (79,80,81,82,83,84,85,86) einschließlich eines Datenspeichers (87) zur Abspeicherung von Notprogrammen umfaßt.

2. Servo-Einheit nach Anspruch 1, dadurch **gekennzeichnet,** daß die Funktionseinheiten von zwei Servo-Verstärkern (79) und (80), einer Prozessoreinheit (81), einem Modulator (82), einem Demodulator (83), einem Sender (84), einem Empfänger (85), einem Positionswandler (86) und einem Stromversorgungsteil (88) gebildet sind.

3. Servo-Einheit nach Anspruch 1 oder 2, dadurch **gekennzeichnet,** daß zur Betätigung der Steuerflächen (1,2,3,4,5,6) ein Hydraulikzylinder (71) vorgesehen ist.

4. Servo-Einheit nach einem der Ansprüche 1 bis 3, dadurch

**gekennzeichnet,** daß zur Betätigung der Steuerflächen (1,2,3,4,5,6) ein elektrischer Servomotor vorgesehen ist.

**Claims**

1. Servo unit for operating control surfaces or the like which are part of an aircraft control system, in which respect the aircraft control system substantially represents a digital computer circuit based on at least two processors with respective associated stores, whereby malfunctions of the circuit are detected by means of a malfunction detection logic, and defective parts of the circuit are automatically switched off, and the circuit further comprises an input and an output unit, in which respect all named operational units are interconnected both via an address and data bus and via a DMA control bus, characterised in that the servo unit (14) comprises electronic operational units (79, 80, 81, 82, 83, 84, 85, 86) corresponding digitally with the control system, including a data store (87) for storage of emergency programs.

2. Servo unit according to claim 1, characterised in that the operational units are composed of two servo amplifiers (79) and (80), a processor unit (81), a modulator (82), a demodulator (83), a transmitter (84), a receiver (85), a position converter (86) and a current supply means (88).

3. Servo unit according to claim 1 or 2, characterised in that a hydraulic cylinder (71) is provided for operation of the control surfaces (1, 2, 3, 4, 5, 6).

4. Servo unit according to one of claims 1 to 3 characterised in that an electric servo motor is provided for operation of the control surfaces (1, 2, 3, 4, 5, 6).

**Revendications**

1. Servo-mécanisme pour l'actionnement des gouvernes ou analogues faisant partie d'un système de commande de vol, le système de commande de vol comportant essentiellement un circuit de calcul numérique basé sur au moins deux processeurs à mémoires associées, les anomalies de fonctionnement du circuit étant détectées au moyen d'une logique de reconnaissance d'erreur, les éléments défectueux du circuit étant automatiquement mis hors circuit et le circuit comportant en outre une unité d'entrée et de sortie, toutes les unités fonctionnelles mentionnées étant reliées entre elles à la fois par un bus d'adresses et de données et par un bus de commande DMA, caractérisé en ce que le servo-mécanisme (14) comprend des unités fonctionnelles électroniques (79, 80, 81, 82, 83, 84, 85, 86) qui correspondent numériquement avec le système de commande ainsi qu'une mémoire de données (87) pour la mémorisation de programme de secours.

2. Servo-mécanisme selon la revendication 1, caractérisé en ce que les unités fonctionnelles sont constituées de deux servo-amplificateurs (79) et (80), d'une unité processeur (81), d'un modulateur (82), d'un démodulateur (83), d'un émetteur (84), d'un récepteur (85), d'un transducteur de position (86) et d'un module alimentation en courant électrqiue (88).

3. Servo-mécanisme selon la revendication 1 ou 2, caractérisé en ce qu'il est prévu pour la commande des gouvernes (1, 2, 3, 4, 5, 6) un vérin hydraulique (71).

4. Servo-mécanisme selon l'une des revendications 1 à 3, caractérisé en ce qu'il est prévu pour la commande des gouvernes (1, 2, 3, 4, 5, 6) un servo-moteur électrique.

FIG. 1

EP 0 268 041 B1

FIG. 2

Zum Mischer 15

Fig.3

Fig.4

EP 0 268 041 B1

von Steuersäule 9a'

Verbindungseinheit Steuersäule 9a'

Verbindungseinheit Steuersäule 9a"

von Steuersäule 9a"

zum Kraftsimulator 35'

zum Kraftsimulator 35"

39

40

Zentrale
Prozessor-
Einheit 1

41

Zentrale
Prozessor-
Einheit 2

42

Zentrale
Prozessor-
Einheit 3

43

15

Speicher 1

Speicher 2

Speicher 3

46

44

45

Vertikale
Referenz 1

Vertikale
Referenz 2

Vertikale
Referenz 3

47

48

49

Horizontale
Referenz 1

Horizontale
Referenz 2

Horizontale
Referenz 3

50

51

52

zum Informations-
System 16

zum Informations-
System 17

zum Informations-
System 18

Fig.5

EP 0 268 041 B1

Fig. 6

Fig. 7

EP 0 268 041 B1

**Fig.8**

**Fig.9**